# EUROPEAN PATENT SPECIFICATION

(11) **EP 1 287 047 B1**
(45) Date of publication and mention of the grant of the patent: **13.08.2008**
(21) Application number: 01936657.4
(22) Date of filing: 07.06.2001
(51) Int. Cl.: C08F 220/38, C08F 2/48

(54) **PHOTO-POLYMERS AND USE THEREOF**
PHOTOPOLYMERE UND IHRE ANWENDUNG
PHOTOPOLYMERES ET UTILISATION CORRESPONDANTE

(30) Priority: 07.06.2000 GB 0013767
(43) Date of publication of application: 05.03.2003
(73) Proprietor: TeraHertz Photonics Limited, Livingston EH54 7ET (GB)
(72) Inventor: SUYAL, Navin, Edinburgh EH14 2HD (GB); MCEWAN, Iain, Currie EH14 5QW (GB)
(74) Representative: Szczuka, Jan Tymoteusz
(86) International application number: PCT/GB2001/002498
(87) International publication number: WO 2001/094430

(56) References cited:
- EP-A- 0 384 725
- FR-A- 2 765 879

## Description

The present invention relates to optical polymers and the use thereof.

Large-scale integration of various electronic components on single chip was responsible for the microelectronic revolution we have witnessed. The same argument justifies the need for the integration of photonic components on a single substrate. Such integrated photonic devices are also termed as planar lightwave circuits (PLCs) [1]. Synthetic plastics polymers are one of the very promising alternatives for the fabrication of PLCs. Polyimide [2], polycarbonate [3], cyclobutene [4,5] and poly-acrylate [6,7] are examples of the polymers being explored for such applications.

Poly methyl methacrylate (PMMA) is one of the acrylate materials that has been very well explored in the context of polymer optical fibres [8] and planar waveguides [9,10,11,12]. The advantages of PMMA are its well-understood chemistry, cost effective precursors and low temperature processing. Furthermore, it has reasonably good transmittance properties with acceptable losses at wavelengths up to 850 nm. However, its limited temperature stability and increased losses for wavelength windows of 1.3 and 1.55µm make it unsuitable for telecommunication applications. It has been found that the losses in 1.3 and 1.55µm wavelength range can be reduced to some extent by the partial substitution of hydrogen groups with deuterium or fluorine. The problem of limited temperature stability however remains. Furthermore, control of viscosity is needed for various applications requiring thick films (like multimode components and tall flip chip bumps).

We have now found that, surprisingly, it is possible to produce economically, polyacrylate optical polymers with very high thermal stability, typically up to 250°C or more, with a good range of refractive index and viscosity, and good adhesion to typical substrates such as glass, silica and silicon, which polymers are based on sulphur containing monomers.

Thus in a first aspect the present invention provides an optical polyacrylate polymer wherein at least 20% w/w of the total monomer repeating units are of the general formula (I)

-(-CH₂-C(R¹)(COOR²)-)- (I)

wherein R¹ is H or a C1 to C12, preferably C1 to C6, aliphatic or aromatic group, most preferably CH₃, and
R² is an aliphatic and/or aromatic moiety containing at least one S atom, and wherein said polymer has a T_{g} (glass transition temperature) of at least 140°C. Preferably R² is of the general formula -R³SR⁴ wherein R⁴ is selected from an aliphatic group CₙH_{2n+1-y}Z_{y} wherein n is an integer from 1 to 12, wherein each Z can be F, Cl, Br, I, or (meth)acrylate, and y is from 0 to 2n+1, and an aromatic group C₆H₅₋ₓAₓ, wherein each A can be F, Cl, Br, I or (meth)acrylate, and x is a natural number from 0 to5, and R³is selected from an aliphatic group CₙH_{2n-y}Z_{y} and an aromatic group C₆H₄₋ₓAₓ, wherein n, Z and A have the same meaning, and y is from 0 to 2n, and x is a natural number from 0 to 4. Preferably x is zero. Preferably n is from 1 to 6. Preferred examples of R² are (C₆H₅)S(CH₂), (C₆H₅) S (C₂H₄), (C₆H₅)S(C₆H₄), (CH₃)S(CH₂), (CH₃)S(C₂H₄), (CH₃)S(C₆H₄), (C₂H₅) S (CH₂), (C₂H₅) S (C₂H₄) and (C₂H₅) S(C₆H₄).

As indicated above, one or more of R³ or R⁴ may themselves contain further acrylate and/or methacrylate groups, which lead to multi functionality and can be used to obtain cross-linked photopolymers. Further preferred examples of R² of this type include: (CH₂) S (CH₂) -OOC-C (R¹)=CH₂, (C₂H₄) S(C₂H₄) -OOC-C(R¹)=CH₂ and (C₃H₆)S(C₃H₆)-OOC-C(R¹)=CH₂. Increased crosslinking has the advantage of increasing density and mechanical strength, as well as improving impermeability to moisture and resistance to other potentially damaging environmental factors.

Whilst polymers produced using conventional acrylates typically have T_{g} (glass transition temperature) values of around 100 to 120°C, polymers according to the present invention can readily be obtained with significantly higher T_{g} values of around 180°C. The polymers of the present invention have T_{g} values of at least 140°C, typically from 160 to 200°C. Also whilst the thermal stability limit of polymers produced using conventional acrylates is only around 220 to 250°C, the polymers of the present invention generally have good thermal stability up to at least 280°C, for example, up to around 300°C.

In another aspect the present invention provides an optical polyacrylate polymer, according to claim 28, obtainable by polymerisation of acrylate monomer wherein at least 20% w/w of the acrylate monomer is of the general formula (II)

CH₂=C(R¹)COOR² (II)

wherein R¹ and R² have the same meaning as before.

In a further aspect the present invention provides a photo-polymerisable composition according to claim 24.

In a yet further aspect the present invention provides a process for producing a polyacrylate photo-polymer comprising the steps of :
providing a photo-polymerizable composition according to claim 24, and exposing said composition to light so as to activate the photo-initiator.

Thus the present invention also provides a method of producing a PLC which comprises the steps of :
applying a photo-polymerisable composition according to claim 24 to a substrate; projecting a photographic image defining components of said PLC onto said composition so as to photo-polymerise selected portions of said composition to produce a polymer according to claim 1; and removing unreacted composition from said substrate.

In a still further aspect the present invention provides a PLC wherein the circuitry is of a polymer of the present invention.

It will be appreciated that various other acrylate monomers and non-acrylate monomers suitable for use in the production of optical polymers, may also be included in the polymerisable compositions for various purposes, such as in order to extend the sulphur containing acrylate monomer with lower cost monomers, and/or to modify the optical and/or other physical properties of the polymers provided by them. Thus for example by using suitable proportions of two different monomers which when used alone provide polymers with different refractive indices, it is possible to obtain polymers with various intermediate values of refractive index. Of course more than two monomers may be used, the refractive index of the final product corresponding generally to the weighted average of the individual refractive indices.

In more detail there may be included various poly-functional groups in order to obtain cross-linked polymers which have greater resistance to moisture ingress, temperature stability, and ageing stability. In general, suitable di-functional monomers which may be used have the general formula (III)

CH₂=C(R⁵)COO R⁶-R^{6'}OOC(R^{5'})C=CH₂, (III)

wherein R⁵ and R^{5'} are H or CH₃ and could be same or different and R⁶ and R^{6'} are C1 to C12 aliphatic or aromatic organic groups and can also be the same or different. Preferred examples of such di-functional compounds which are unsubstituted are:
1,4-butanediol diacrylate, ethylene diacrylate, ethoxylated bisphenol A diacrylate, bisphenol A diacrylate or dimethacrylate, neopentylglycol diacrylate, diethyleneglycol diacrylate, diethylene glycol dimethacrylate, 1,6-hexane-diol diacrylate, triethylene glycol diacrylate or dimethylacrylate; tetraethylene glycol diacrylate or dimethacrylate; polyethylene glycol diacrylate or dimethacrylate; dipropylene glycol diacrylate; tripropylene glycol diacrylate; ethoxylated neopentyl glycol diacrylate; propoxylated neopentyl glycol diacrylate, and mixtures of two or more thereof.

Suitable tri- and tetra-functional acrylate monomers which may be used generally have the general formula (IV) or (V).

[CH₂=C (R¹) COOR⁷]₃CH (IV)

or

[CH₂=C (R¹)COOR⁷]₄C (V)

wherein in each of formulae IV and V, all the R¹ and/or all the R⁷ groups may be the same or may be different, R¹ having the same meaning as before, and R⁷ being a C1 to C12 aliphatic or aromatic group.

Preferred examples of such tri- and tetra-functional acrylates are:
pentaerythritol triacrylate, trimethylolpropane trimethacrylate, trimethylol propane triacrylate, ethoxylated trimethylolpropane triacrylate, propoxylated trimethylolpropane triacrylate, glyceryl propoxylated triacrylate, tris (2-hydroxyethyl) isocyanurate triacrylate, pentaerythritol tetracrylate, alkoxylated tetracrylate, ditrimethylolpropane tetracrylate and mixtures thereof.

Where such polyfunctional acrylates are included, they may conveniently be used in amounts corresponding to up to 100% and preferably at least 20% w/w of non-sulphur containing monomer units which are di-functional and/or up to 30% of tri- and/or tetra-functional monomer units, with desirably at least 10% w/w, advantageously at least 30% w/w, for example, from 30 to 50% w/w, of all non-sulphur containing monomer units used, being polyfunctional.

There may also be used acrylate monomers whose main function is as low-cost extenders (although it will of course be appreciated that various monomers used in the present invention, may have two or more different roles). Suitable mono-functional monomers in this connection are of the general formula (VI).

CH₂=C(R¹)COO(R⁸) (VI)

wherein R¹ has the same meaning as before (preferably is CH₃) and R⁸ is a C1 to C12 aliphatic or aromatic organic group.

Preferred examples of such compounds are: methyl methacrylate, benzyl methacrylate, phenyl methacrylate, trimethylcyclohexyl methacrylate, methacrylic acid, α- and β- naphthyl methacrylate, isobutyl methacrylate, methyl α-chloroacrylate, n-butyl acrylate, 2-ethylhexyl acrylate, isodecyl acrylate, 2-hydroxyethyl acrylate, 2-hydroxypropyl acrylate, cyclohexyl acrylate; phenoxyethyl acrylate; β-carboxylethyl acrylate; isobornyl acrylate; tetrahydrofurfuryl acrylate; propylene glycol monoacrylate; 2-(2-ethoxyethoxy)ethyl acrylate, cyanoethoxyethyl acrylate, cyclohexymethacrylate, cyclohehylacrylate, adamantyl methacrylate and mixtures thereof.

Conveniently up to 25% w/w of the non-sulphur containing monomer units in the photo-polymer may be of this type.

It will also be appreciated that the monomers used may be substituted to a greater or lesser degree. In this connection it may be noted that reducing the number of C-H bonds present in the photo-polymer is beneficial in reducing absorption losses - especially at longer wavelengths such as 1.55µm. Particularly preferred substituents in this connection are Deuterium and the halogens, in particular F, Cl and Br. In general up to 95% w/w, preferably 50 to 80% w/w, for example up to 78% w/w, of the monomer units may have one or more such substituents.

Preferred examples of such monomers are: chloroethyl acrylate, hexafluorobutyl methacrylate, trichloroethyl acrylate, trichloroethyl methacrylate, trifluoroethyl acrylate, hexafluoro bisphenol A diacrylate, tetrachloro bisphenol A diacrylate, pentafluorobenzyl-acrylate or methacrylate, pentachlorophenyl acrylate or methacrylate, pentafluorophenyl acrylate or methacrylate, perfluorocyclopropyl acrylate, perfluorocyclobutyl acrylate, perfluorocyclophenyl acrylate, perfluorocyclohexyl acrylate, perfluorocyclobutyl methacrylate, perfluorocyclohexyl methacrylate, 1-hydroperfluorocyclohexyl acrylate, perfluorodecyl-acrylate, methacrylate, hexafluoro isopropyl (*meth*)acrylate, perfluoronorbornylmethyl (*meth*)acrylate, perfluoroisobornyl (*meth*)acrylate, hexafluoropentandiyl-1,5-bis (*meth*)acrylate, perfluoroethyleneglycol di(*meth*)acrylate, poly perfluoroethyleneglycol di(*meth*)acrylate, hexafluoro ethoxylated bisphenol A di(*meth*)acrylate, tetrachloro ethoxylated bisphenol A di(*meth*)acrylate, tetrabromo ethoxylated bisphenol A di(*meth*)acrylate, dodecafluoroheptyl (*meth*)acrylate, eicosafluoroundecyl (*meth*)acrylate, heptadecafluorodecyl (*meth*)acrylate, hexadecafluorononyl (*meth*)acrylate, heptadecafluorodecyl (*meth*)acrylate, hexadecafluorononyl (*meth*)acrylate, octafluoropentyl (*meth*)acrylate, perfluoroheptoxy poly(propyloxy)(meth)acrylate, perfluorocyclohexyl-1,4-di(methyl methacrylate), perfluoroethyleneglycol di(meth)acrylate, hexafluoro-bisphenol A di(meth)acrylate, tetrafluorobutanediol di(meth)acrylate, octafluorohexanediol-1,6-diacrylate and mixtures of two or more thereof.

In accordance with the present invention it is generally more or less readily possible to use either of the acrylate and corresponding methacrylate compounds depending on the detailed desired characteristics of the production process and/or product. In general the acrylate compounds will polymerize more quickly being more reactive, whilst the corresponding methacrylate compounds will generally provide less opaque and more thermally stable products. Accordingly the present invention extends to and includes compounds corresponding to those identified in the foregoing and hereinbelow, wherein the acrylate moiety may be substituted for by a corresponding methacrylate moiety and vice versa, for example a reference to pentaerythritol triacrylate is intended to include a reference to pentaerythritol tri-(methyl acrylate) unless otherwise indicated or inappropriate in the particular context thereof. Furthermore, in some instances (for the sake of brevity) we have used the terminology "(*meth*)acrylate" to denote each of the acrylate and corresponding methacrylate compounds.

In order to increase the viscosity of the polymerisable compositions, especially where it is desired to fabricate thicker circuit components using manufacturing processes such as spinning, part of the monomer content may be prepolymerized and present in the composition as polyacrylate polymer. Thus there may be included in the photo-polymerisable composition, a polyacrylate polymer of the general formula (VII):

H-(CH-C(R¹) (COOR⁹)-)ₙ-H (VII)

wherein R¹ has the same meaning as before, R⁹ is C1 to C10, optionally substituted, for example by halo, alkyl or aryl, and n is an integer greater than 100, typically n is in the range of from 200 to 50,000. Conveniently up to 15% w/w of the monomer units in the photo-polymer may be incorporated in this way.

Preferred examples of such polymers are: poly(methyl methacrylate), poly(phenyl methacrylate), poly(benzyl methacrylate), poly(butyl acrylate), poly(ethylene glycol dimethacrylate), poly(isopropyl) methacrylate and poly(ethyl) methacrylate, and halogenated analogues thereof including for example, poly(trifluoroethyl methacrylate), poly(pentachlorophenyl methacrylate) and poly(pentabromophenyl methacrylate).

Where non-acrylate monomers are included, these may conveniently consitute up to 40% w/w of the total monomer. Suitable non-acrylate monomers that may be used include one or more of epoxide, polycarbonate, silicone and siloxane compounds.

Various photo-initiators suitable for use in polymerisation are well known in the art. In general there may be used from 0.1 to 5% w/w of photo-initiator in the photo-polymerisable compositions. Suitable photoinitiators that may be mentioned are : benzidimethyl ketal (Irgacure 651 TRADE NAME); alpha, alpha diethyloxy acetophenone; alpha, alpha-dimethyloxy-alpha hydroxy acetophenone (Darocur 1173, TRADE NAME); 1-hydroxycyclohexyl phenyl ketone (Irgacure 184, TRADE NAME), 1-[4-(2-hydroxyethoxy) phenyl]- 2-hydroxy-2-methyl-propan-1-one (Darocur 2959, TRADE NAME); 2-methyl-1-4(methylthio) phenyl]-2-morpholino-propan-1-one (Irgacure 907, TRADE NAME); and 2-benzyl-2-dimethylamino-1-(4-morpholinophenyl) butan-1-one (Irgacure 369, TRADE NAME), 50% benzophenone and 50% 1-hydroxy-cyclohexyl-phenyl ketone (Irgacure 500, TRADE NAME).

Various other additives known in the photo-polymer art may also be included in the photo-polymeriseable compositions. Thus, for example, it is generally desirable to include a so-called adhesion promoter to increase adhesion of the photo-polymer, especially in the cladding layer, to the substrate and prevent lifting-off thereof during washing away of unpolymerised composition after photo-polymerisation and/or in subsequent use. Typically the photo-polymeriseable composition may include from 0 to 10% w/w of adhesion promoter, preferably from 5 to 8 wt%. Examples of suitable adhesion promoters are: 3-(trimethoxysilyl)propyl methacrylate, 3-acryloxypropyl trichlorosilane, trimethylsilyl propyl methacrylate, and 3-amino propyl triethoxysilane.

In general the preparation, processing and use of the photo-polymerisable compositions of the present invention are similar to those conventionally employed in the art. Thus in order to ensure substantial homogeneity of the photo-polymerisable compositions (and ultimately the photopolymers), the various components are thoroughly mixed together for a suitable period of time, typically from 0.05 to 250 hours, conveniently from 0.5 to 50 hours. Desirably mixing is carried out at a somewhat elevated temperature - generally from 20 to 80°C.

Prior to polymerisation, the composition is desirably filtered, conveniently using a pore size of from 0.1 to 10µm.

Application of the polymerizable composition to a suitable substrate such as glass, silica, silicon, etc, may be effected using any suitable technique known in the art, such as dip, spin, spray, flow or slot coating methods, further details of which are described in the literature.

For the purposes of producing PLCs, the photo-polymerisable composition coating is exposed to UV-light through a mask containing the various optical component structures required such as waveguides, couplers, splitters and gratings under suitable conditions for a suitable time interval in accordance with normal practice, after which the unexposed regions are washed away using suitable organic solvents such as acetone, iso-butyl methyl ketone or mixtures thereof with iso-propanol. This leaves ridge-like photo-polymer structures on the substrate.

Normally, a second coating layer (usually referred to as the cladding layer), having a refractive index somewhat lower, typically from 0.3 to 8% less than that of the first layer, is applied over the top of the substrate with the laid-down photo-polymer structures thereon, conveniently by spinning, and then cured.

It will of course be appreciated that the optical polymers of the present invention may also be produced by means of thermal polymerisation of the monomer(s), although this is generally less convenient. In order to produce photonic components such as PLCs and/or other devices, the polymers so obtained would normally be patterned using photolithography and reactive ion etching techniques well known in the art. In such cases it will be appreciated that there should be used suitable thermally activatable initiators in place of the photo-initiators. Various thermally activated initiators suitable for use in polymerisation are well known in the art. In general there may be used from 0.1 to 5% w/w of a thermally activated initiator in the polymerisable compositions. Suitable thermally activated initiators which may be mentioned include 2-2'azo-bis-isobutyrylnitrile (AIBN) and benzoyl peroxide. In general polymerization would be carried out at an elevated temperature of up to 200°C, conveniently about 100°C.

The invention is further illustrated by the following examples, which are illustrative of the specific aspects of practising the invention and should not be taken as limiting the scope of the invention to be defined by the claims. In the following examples, thermal stability was determined using themogravimetric methods, with substantial thermal stability being indicated by weight loss of not more than 0.5% w/w. T_{g} Glass transition temperature measurements were determined using dynamic mechanical methods in cantilever mode, at a heating rate of 5°C per minute (see for example "TA Instruments, Thermal Analysis & Rheology Operators Manual", 1999).

### Example 1: Preparation of Photo-polymerisable Composition and Production of PLC.

2.00 g phenylthioethyl acrylate (from Bimax, Maryland) was added to 2.00 g methyl methacrylate (from Sigma - Aldrich) and 1.25 g ethoxylated bisphenol A dimethacrylate (from Roehm GmbH, Darmstadt) and thoroughly mixed. 0.25 g polymethyl methacrylate powder was added to this solution and dissolved by stirring at 60°C for 12 h. This mixture was further reacted for 96 h at 60°C. 0.1838 g photo-initiator (Irgacure 184 (TRADE NAME) from Ciba Specialty Chemicals) was also added to the above mixture and dissolved. This solution was filtered using a 1µm glass pre-filter and 0.2µm Teflon (TRADE NAME) filter and spun on glass or Si substrate. The spinning speed (rpm) was kept 340 for 10 sec and 560 for 30 sec. This coating was placed on a computer controlled translation stage and tracks were defined by exposing it with a focused 4 mW power of 325 nm He-Cd UV laser. The unpolymerised parts were washed off by rinsing the substrate with isobutyl methyl ketone for 2 min. The ridge-like structures of the PLC formed on the substrate were covered using a coating from a second formulation synthesised exactly as above but with the following composition: 1.00 g phenylthioethyl acrylate + 2.00 g methyl methacrylate + 1.00 g ethoxylated bisphenol A dimethacrylate + 0.25 g polymethyl methacrylate + 0.14 g Irgacure 184 (TRADE NAME). This layer was flooded with UV light from a mercury lamp for 1 h which led to polymerisation of the monomer layer and provided a PLC with clad waveguides having transmission losses of 0.17 dB/cm at 850 nm. The photo-polymer of the PLC was stable up to 300°C

### Example 2:

3.25 g phenylthioethyl acrylate was added to 0.75 g methyl methacrylate. 0.50 g ethylene diacrylate (from Fluka) and 0.5g pentaerythritol tetracrylate (from ABCR) were also added to the above mixture and thoroughly mixed. 0.40 g polymethyl methacrylate powder was added to this solution and dissolved by stirring at 60°C for 12 h. This mixture was further reacted for 96 h at 60°C. 0.15 g Irgacure 184 (TRADE NAME) photoinitiator was also added to the above mixture and dissolved. This solution was filtered using 0.2 micron Teflon (TRADE NAME) filter and 1µm glass pre-filter and spun on glass or Si substrate. The spinning speed (rpm) was kept to 340 for 10 sec and 560 for 30 sec. This coating also was structured in a similar manner as explained in Example 1. The following composition was used for the cladding layer. 2.25 g phenylthioethyl acrylate + 2.00 g methyl methacrylate + 0.50 g ethylene diacrylate + 0.5 g pentaerythritol tetracrylate + 0.42 g polymethyl methacrylate powder + 0.158 g Irgacure 184 (TRADE NAME). This resulted in cladded planar waveguides with transmission losses of 0.5 dB/cm at 1300 nm and thermal stability of up to 275°C.

### Example 3:

1.82 g phenylthioethyl acrylate was added to 0.328 g methyl methacrylate. 0.37 g ethylene diacrylate, 0.385 g pentaerythritol tetracrylate and 1.094 g hexafluorobutyl methacrylate (from Sigma-Aldrich) were also added to the above mixture and thoroughly mixed. 0.30 g polymethyl methacrylate powder was added to this solution and dissolved by stirring at 40°C for 24 h. This mixture was further reacted for 48 h at 40°C. 0.10 g Irgacure 184 (TRADE NAME) was also added to the above mixture and dissolved. This solution was filtered and spun on glass or Si substrate. This coating also was structured in a similar manner as explained in Example 1. The following composition was used for the cladding layer. 0.82g phenylthioethyl acrylate + 1.328 g methyl methacrylate + 0.47g ethylene diacrylate + 0.285 g pentaerythritol tetracrylate + 1.2 g hexafluorobutyl methacrylate + 0.30 g poly(methyl methacrylate) + 0.15 g Irgacure 184 (TRADE NAME). This resulted in planar waveguides with low transmission losses of 0.7 dB/cm at 1550 nm.

### Example 4:

2.25 g phenylthioethyl acrylate was added to 0.55 g methyl methacrylate. 0.90 g ethoxylated bisphenol A dimethacrylate, 0.50 g pentaerythritol tetracrylate and 1.51 g pentachlorophenyl methacrylate (from Sigma-Aldrich) were also added to the above mixture and thoroughly mixed. 0.143 g polymethyl methacrylate powder was added to this solution and dissolved by stirring at 50°C for 24 h. This mixture was further reacted for 48 h at 60°C. 0.143 g Irgacure 184 (TRADE NAME) was also added to the above mixture and dissolved. This solution was filtered and spun on to a glass or Si substrate. This coating also was structured as in Example 1 in order to obtain a PLC with an array of planar waveguides each having a height of 7µm and a width of 7 µm. Cladding layer was applied as above using the following composition: 1.95 g phenylthioethyl acrylate + 1.14 g methyl methacrylate + 1.22 g ethoxylated bisphenol A dimethacrylate + 0.48 g pentaerythritol tetracrylate + 1.21 g pentachlorophenyl methacrylate + 0.27 g polymethyl methacrylate + 0.15 g Irgacure 184 (TRADE NAME). This resulted in planar waveguides with low transmission losses of 0.5 dB/cm at 1550 nm.

### Example 5:

1.0g phenylthioethyl acrylate was added to 1.25g bisphenol A dimethacrylate (from Sigma-Aldrich) and 2.75g hexane dimethacrylate (from Sigma-Aldrich) and thoroughly mixed. 0.20g polymethyl methacrylate powder was added to this solution and dissolved by stirring at 60°C for 24 hours. 0.1g Darocur 1173 (TRADE NAME) photoinitiator was added to the above mixture and dissolved for 1 hour. This solution was then filtered using a 0.2 micron Teflon (TRADE NAME) filter and spun on glass or Si substrate. The spinning speed was kept at 150rpm for 10 seconds and 300 for 20 seconds. This layer was flooded with UV light from a mercury lamp for 5 min, which led to polymerisation of the monomer, and subjected to a post-cure at a temperature of 150°C for 1 hour. This photo-polymer has a glass transition temperature of 203°C and is thermally stable up to 300ºC.

### Example 6:

1.0g phenylthioethyl acrylate was added to 1.0g ethoxylated bisphenol A dimethacrylate and 3.0g hexane dimethacrylate (from Sigma-Aldrich) and thoroughly mixed. 0.20g polymethyl methacrylate powder was added to this solution and dissolved by stirring at 60°C for 24 hours. 0.1g Darocur 1173 (TRADE NAME) photoinitiator was added to the above mixture and dissolved for 1 hour. This solution was then filtered using a 0.2 micron Teflon (TRADE NAME) filter and spun on glass or Si substrate. The spinning speed was kept at 150rpm for 10 seconds and 300 for 20 seconds. This layer was flooded with UV light from a mercury lamp for 5 min., which led to polymerisation of the monomer, and subjected to a post-cure at a temperature of 150°C for 1 hour. This photo-polymer has a glass transition temperature of 159°C and is stable up to 300°C.

### Example 7:

1.0g thiodiglycoldiacrylate (from Bimax, Maryland) was added to 0.5g hexafluorobisphenol A dimethacrylate (from ABCR of Karlsruhe, Germany), 1.75g octafluorohexane diemthacrylate (from Apollo Scientific Ltd of Whaley Bridge, England) and 1.75g perfluorocyclohexane dimethyl dimethacrylate (from Apollo) and thoroughly mixed. 0.20g polymethyl methacrylate powder was added to this solution and dissolved by stirring at 60°C for 24 hours. 0.1g Darocur 1173 (TRADE NAME) photoinitiator was added to the above mixture and dissolved for 1 hour. This solution was then filtered using a 0.2 micron Teflon (TRADE NAME) filter and spun on glass or Si substrate. The spinning speed was kept at 150rpm for 10 seconds and 300 for 20 seconds. This coating was structured as in example 1 to produce a highly fluorinated waveguide structure which is thermally stable up to 300°C.

### References:

1. Diode Lasers and Photonic Integrated Circuits, Larry A. Coldren and Scott W. Corzine, John Wiley and Sons, 1995.
2. Prakash, et al., IEEE Photonics Tech. Let., 9[6] (1997) 800.
3. Uehara, K. et al., Proc. 7nth Inter. Plastic Optical Fiber Conference '98, Oct. 5-8, 1998, p. 19.
4. Shul, R. J. et al., Elelct. Let., 31[22] (1995) 1919.
5. Fischbeck, G. et al., Elect. Let., 33[6] (1997) 518.
6. Eldada, L. et al., Proc. SPIE vol. 3234 (1998) 161.
7. Knoche, T. et al., Elect. Let., 32[14] (1996) 1284.
8. Emslie, Ch., J. Mat. Sci., 23 (1988) 2281.
9. Hikita, M. et al., Thin Solid Films 331 (1998) 303.
10. Knoche, T. et al., Elect. Let. 32[14] (1996) 1284.
11. Cook, J. P. D. et al., Appl. Opt. 37[7] (1998) 1220.
12. Das, A. K. et al., Appl. Opt. 37[28] (1998) 6779.

## Claims

1. An optical polyacrylate polymer suitable for use in a planar lightwave circuit (PLC), wherein at least 20% w/w of the total monomer repeating units are of the general formula (I)
-(-CH₂-C(R¹)(COOR²)-)- (I)
wherein R¹ is H or a C1 to C12 aliphatic and/or aromatic group, and R² is an aliphatic and/or aromatic moiety containing at least one S atom, and wherein said polymer has a Tg (glass transition temperature) of at least 140°C.

2. A polymer according to claim 1 wherein R¹ is H or a C1 to C6 aliphatic and/or aromatic group.

3. A polymer according to claim 2 wherein R¹ is H or CH₃.

4. A polymer as claimed in any one of claims 1 to 3 wherein R² is of the general formula -R³SR⁴ wherein R⁴ is selected from an aliphatic group CₙH_{2n+1-y}Z_{y} wherein n is an integer from 1 to 12, wherein each Z can be F, C1, Br, I, or (meth)acrylate, and y is from 0 to 2n+1, and an aromatic group C₆H₅₋ₓAₓ, wherein each A can be F, Cl, Br, I or (meth)acrylate, and x is a natural number from 0 to5, and R³is selected from an aliphatic group CₙH_{2n-y}Z_{y} and an aromatic group C₆H₄₋ₓAₓ, wherein n, Z and A have the same meaning, and y is from 0 to 2n, and x is a natural number from 0 to 4.

5. A polymer as claimed in claim 4 wherein n is from 1 to 6.

6. A polymer as claimed in either one of claims 4 and 5 wherein x is zero.

7. A polymer as claimed in any one of claims 4 to 6 wherein R² is selected from sulphur containing moieties including:
(C₆H₅) S (CH₂) (C₆H₅) S (C₂H₄), (C₆H₅) S (C₆H₄), (CH₃) S (CH₂), (CH₃) S(C₂H₄), (CH₃) S (C₆H₄), (C₂H₅) S (CH₂), (C₂H₅) S (C₂H₄) and (C₂H₅)S(C₆H₄).

8. A polymer as claimed in any one of claims 4 to 6 wherein R² is selected from the group comprising: (CH₂)S(CH₂-OOC-C(R¹)=CH₂), (C₂H₄)S(C₂H₄-OOC-C(R¹)=CH₂ and (C₃H₆-S-C₃H₆-OOC-C(R¹)=CH₂, and R¹ is H or methyl.

9. A polymer as claimed in any one of claims 1 to 8 wherein at least 20% w/w of the total monomer repeating units are from a monofunctional monomer of the general formula (II):
CH₂=C(R¹)COOR²(II) wherein R¹ and R² have the same meaning as before.

10. A polymer as claimed in any one of claims 1 to 9 wherein at least 10 % w/w of said total monomer units are from one or more poly-functional monomers wherein said poly-functional monomers are selected from di-, tri and tetra-functional monomers.

11. A polymer as claimed in claim 10 wherein said di-functional monomer(s) has the general formula (III) CH₂=C(R⁵)COO R⁶-R^{6'}OOC(R^{5'})C=CH₂; wherein, R⁵ and R^{5'} are H or CH₃ and could be same or different and R⁶ and R^{6'} are C1 to C12 aliphatic or aromatic organic groups and can also be the same or different.

12. A polymer as claimed in claim 11 wherein said di-functional monomer(s) is selected from: 1,4-butanediol diacrylate, ethylene diacrylate, ethoxylated bisphenol A diacrylate, bisphenol A diacrylate or dimethacrylate, neopentylglycol diacrylate, diethyleneglycol diacrylate, diethylene glycol dimethacrylate, 1,6-hexane-diol diacrylate, triethylene glycol diacrylate or dimethacrylate; tetraethylene glycol diacrylate or dimethacrylate; polyethylene glycol diacrylate or dimethacrylate; dipropylene glycol diacrylate; tripropylene glycol diacrylate; ethoxylated neopentyl glycol diacrylate; propoxylated neopentyl glycol diacrylate, perfluorocyclohexyl-1,4-di(methyl methacrylate), perfluoroethyleneglycol diacrylate, hexafluoro-bisphenol A diacrylate, tetrafluorobutanediol diacrylate, octafluorohexanediol-1,6-diacrylate and mixtures thereof.

13. A polymer as claimed in any one of claims 10 to 12 wherein said tri-functional monomer(s) has the general formula (IV), [CH₂=C(R¹)COOR⁷]₃CH; wherein, R¹ has the same meaning as before and R⁷ is a C1 to C12 aliphatic or aromatic group.

14. A polymer as claimed in claim 13 wherein said tri-functional monomer is selected from: pentaerythritol triacrylate, trimethylolpropane trimethacrylate, trimethylol propane triacrylate, ethoxylated trimethylolpropane triacrylate, propoxylated trimethylolpropane triacrylate, tris (2-hydroxyethyl) isocyanurate triacrylate, and glyceryl propoxylated triacrylate and mixtures thereof.

15. A polymer as claimed in any one of claims 10 to 14 wherein said tetra-functional monomer(s) has the general formula (V) [CH₂=C(R¹)COOR⁷]₄C,wherein R¹ and R⁷ have the same meaning as before.

16. A polymer as claimed in claim 15 wherein said tetra-functional monomer(s) is selected from: pentaerythritol tetracrylate, alkoxylated tetracrylate, ditrimethylolpropane tetracrylate and mixtures thereof.

17. A polymer as claimed in any one of claims 1 to 16 wherein at least 10% of the monomer units are from non-sulphur containing monomers of the general formula (VI) CH₂=C(R¹)COO(R⁸), wherein R⁸ is a C1 to C12 aliphatic or aromatic group.

18. A polymer as claimed in claim 17 wherein said non-sulphur containing monomers are selected from: methyl methacrylate, benzyl methacrylate, phenyl methacrylate, trimethylcyclohexyl methacrylate, methacrylic acid, α- and β- naphthyl methacrylate, isobutyl methacrylate, methyl α-chloroacrylate, n-butyl acrylate, 2-ethylhexyl acrylate, isodecyl acrylate, 2-hydroxyethyl acrylate, 2-hydroxypropyl acrylate, cyclohexyl acrylate; phenoxyethyl acrylate; β-carboxylethyl acrylate; isobornyl acrylate; tetrahydrofurfuryl acrylate; propylene glycol monoacrylate; 2-(2-ethoxyethoxy)ethyl acrylate, cyanoethoxyethyl acrylate, cyclohexymethacrylate, cyclohexylacrylate, adamantyl methacrylate and mixtures thereof.

19. A polymer as claimed in any one of claims 17 and 18 wherein up to 25 % w/w of the total monomer units forming the polymer are from non-sulphur containing monomers of said general formula (VI).

20. A polymer as claimed in claim 19 wherein up to 95 % w/w of the non-sulphur containing monomers of formula (VI) are halo-substituted.

21. A polymer as claimed in claim 20 wherein said halo-substituted monomers are selected from: chloroethyl acrylate, hexafluorobutyl methacrylate, trichloroethyl acrylate, trichloroethyl methacrylate, trifluoroethyl acrylate, hexafluoro bisphenol A diacrylate, tetrachloro bisphenol A diacrylate, pentafluorobenzyl-acrylate or methacrylate, pentachlorophenyl (*meth*)acrylate, pentafluorophenyl acrylate or methacrylate, perfluorocyclopropyl acrylate, perfluorocyclobutyl acrylate, perfluorocyclophenyl acrylate, perfluorocyclohexyl acrylate, perfluorocyclobutyl methacrylate, perfluorocyclohexyl methacrylate, 1-hydroperfluorocyclohexyl acrylate, perfluorodecyl-acrylate, methacrylate, hexafluoro isopropyl (*meth*)acrylate, perfluoronorbornylmethyl (*meth*)acrylate, perfluoroisobornyl (*meth*)acrylate, hexafluoropentandiyl-1,5-bis (*meth*)acrylate, perfluoroethyleneglycol di(*meth*)acrylate, poly perfluoroethyleneglycol di(*meth*)acrylate, hexafluoro ethoxylated bisphenol A di(*meth*)acrylate, tetrachloro ethoxylated bisphenol A di(*meth*)acrylate, tetrabromo ethoxylated bisphenol A di(*meth*)acrylate, dodecafluoroheptyl (*meth*)acrylate, eicosafluoroundecyl (*meth*)acrylate, heptadecafluorodecyl (*meth*)acrylate, hexadecafluorononyl (*meth*)acrylate, heptadecafluorodecyl (*meth*)acrylate, hexadecafluorononyl (*meth*)acrylate, octafluoropentyl (*meth*)acrylate and perfluoroheptoxy poly(propyloxy)(meth)acrylate wherein (meth) denotes either the acrylate or the corresponding methacrylate derivative.

22. A polymer as claimed in any one of claims 1 to 21 having a Tg value of at least 180°C.

23. A polymer as claimed in any one of claims 1 to 22 having thermal stability up to at least 280°C.

24. A photo-polymerisable composition suitable for use in the preparation of an optical polyacrylate polymer suitable for use in a planar lightwave circuit (PLC), which polymer has a Tg (glass transition temperature) of at least 140°C, said composition comprising acrylate monomer in intimate admixture with a photo-initiator, wherein at least 20% w/w of the acrylate monomer is of the general formula (II)
CH₂=C(R¹)COOR² (II)
wherein R¹ is H or a C1 to C12 aliphatic and/or aromatic group, and R² is an aliphatic and/or aromatic moiety containing at least one S atom.

25. A process for producing a polyacrylate photo-polymer comprising the steps of :
providing a photo-polymerizable composition of claim 24, and exposing said composition to light so as to activate the photo-initiator.

26. A method of producing a planar light-wave circuit comprising the steps of :
applying a photo-polymerisable composition of claim 24 to a substrate;
projecting a photographic image defining components of said planar light-wave circuit onto said composition so as to photo-polymerise selected portions of said composition to produce a polymer of claim 1; and
removing unreacted composition from said substrate.

27. A method as claimed in claim 26 wherein a second coating layer having a refractive index lower than that of the photopolymer is applied over the top of the substrate with the laid-down photo-polymer structures thereon; and then cured.

28. An optical polyacrylate polymer suitable for use in a planar lightwave circuit (PLC), which polymer is obtainable by polymerisation of acrylate monomer wherein at least 20% w/w of the acrylate monomer is of the general formula (II)
CH₂=C(R¹)COOR² (II)
wherein R¹ and R² have the same meaning as before, and wherein said polymer has a Tg (glass transition temperature) of at least 140°C.

29. A planar lightwave circuit wherein the circuitry is formed of a polymer according to any one of claims 1 to 23.

## Patentansprüche

1. Optisches Polyacrylatpolymer, das zur Verwendung in einem planaren Lichtwellenkreis (PLC) geeignet ist, wobei mindestens 20 Gew.-% der gesamten Monomerwiederholungseinheiten die allgemeine Formel (I)
-(-CH₂-C(R¹)(COOR²)-)- (I)
aufweisen, wobei R¹ H oder eine aliphatische und/oder aromatische C1-bis C12-Gruppe ist und R² ein aliphatischer und/oder aromatischer Anteil ist, der mindestens ein S-Atom enthält, und wobei das Polymer eine Tg (Glasübergangstemperatur) von mindestens 140 °C aufweist.

2. Polymer nach Anspruch 1, wobei R¹ H oder eine aliphatische und/oder aromatische Cl- bis C6-Gruppe ist.

3. Polymer nach Anspruch 2, wobei R¹ H oder CH₃ ist.

4. Polymer nach einem der Ansprüche 1 bis 3, wobei R² die allgemeine Formel -R³SR⁴ aufweist, wobei R⁴ unter einer aliphatischen Gruppe CₙH_{2n+1-y}Z_{y}, wobei n eine ganze Zahl von 1 bis 12 ist, wobei jedes Z F, C1, Br, 1 oder (Meth)acrylat sein kann und y 0 bis 2n+1 beträgt, und einer aromatischen Gruppe C₆H₅₋ₓAₓ ausgewählt wird, wobei jedes A F, Cl, Br, 1 oder (Meth)acrylat sein kann und x eine natürliche Zahl von 0 bis 5 ist und R³ unter einer aliphatischen Gruppe CₙH_{2n+1-y}Z_{y} und einer aromatischen Gruppe C₆H₄₋ₓAₓ ausgewählt wird, wobei n, Z und A die gleiche Bedeutung besitzen und y 0 bis 2n beträgt und x eine natürliche Zahl von 0 bis 4 ist.

5. Polymer nach Anspruch 4, wobei n 1 bis 6 beträgt.

6. Polymer nach einem der Ansprüche 4 und 5, wobei x null beträgt.

7. Polymer nach einem der Ansprüche 4 bis 6, wobei R² aus Schwefel ausgewählt wird, der Anteile enthält, die (C₆H₅)S(CH₂), (C₆H₅)S(C₂H₄), (C₆H₅)S(C₆H₄), (CH₃)S(CH₂), (CH₃)S(C₂H₄), (CH₃)S(C₆H₄), (C₂H₅)S(CH₂), (C₂H₅)S(C₂H₄) und (C₂H₅)S(C₆H₄) enthalten.

8. Polymer nach einem der Ansprüche bis 6, wobei R² aus der Gruppe ausgewählt wird umfassend: (CH₂)S(CH₂-OOC-C(R¹)=CH₂), (C₂H₄)S(C₂H₄OOC-C(R¹)=CH₂ und (C₃H₆-S-C₃H₆-OOC-C-C(R¹)=CH₂ und R¹ H oder Methyl ist.

9. Polymer nach einem der Ansprüche 1 bis 8, wobei mindestens 20 Gew.-% der gesamten Monomerwiederholungseinheiten aus einem monofunktionellen Monomer der allgemeinen Formel (II) CH₂=C(R¹)COOR² (II) stammen, wobei R¹ und R² die gleiche Bedeutung besitzen wie vorher.

10. Polymer nach einem der Ansprüche 1 bis 9, wobei mindestens 10 Gew.-% der gesamten Monomereinheiten aus einem oder mehreren polyfunktionellen Monomeren stammen, wobei die polyfunktionellen Monomere unter di-, tri- und tetrafunktionellen Monomeren ausgewählt werden.

11. Polymer nach Anspruch 10, wobei das bzw. die difunktionelle(n) Monomer(e) die allgemeine Formel (III) CH₂=C(R⁵)COOR⁶ -R^{6'}-OOC(R^{5'})C=CH aufweist bzw, aufweisen; wobei R⁵ und R^{5'} H oder CH₃ sind und gleich oder verschieden sein können und R⁶ und R^{6'} aliphatische oder aromatische organische C1- bis C12-Gruppen sind und ebenfalls gleich oder verschieden sein können.

12. Polymer nach Anspruch 11, wobei das bzw. die difunktionelle(n) Monomer(e) ausgewählt werden unter: 1,4-Butandioldiacrylat, Ethylendiacrylat, ethoxyliertem Bisphenol A-diacrylat, Bisphenol A-diaetylat oder -dimethacrylat, Neopentylglykoldiacrylat, Diethylenglykoldiacrylat, Diethylenglykoldimethacrylat. 1,6-Hexandioldiacrylat, Triethylenglykoldiacrylat oder -dimethacrylat; Tetraethytenglykotdiacrylat oder dimethacrylat; Polyethylenglykoldiacrylat oder -dimethacrylat; Dipropylenglykoldiacrylat; Tripropylenglykoldiaerylat; ethoxyliertem Neopentylglykoldiaycrylat; propoxyliertem Neopentylglykoldiacrylar, Pefluorcyclohexyl-1,4-di(methylmethycrylat), Perfluorethylenglykoldiacrylat, Hexafluorbisphenol A-diacrylat, Tetrafluorbutandioldiacrytat, Octafluorhexandiol-1,6-diacrylat und Mischungen derselben.

13. Polymer nach einem der Ansprüche 10 bis 12, wobei das bzw. die trifunktionelle(n) Monomer(e) die allgemeine Formel (IV) [CH₂=C(R¹)COOR⁷]₃CH aufweist bzw. aufweisen; wobei R¹ die gleiche Bedeutung wie vorher aufweist und R⁷ eine aliphatische oder aromatische C 1 - bis C12-Gruppe ist.

14. Polymer nach Anspruch 13, wobei das trifunktionelle Monomer ausgewählt wird unter:
Pentaerythrittriacrylat, Trimethylolpropantrimethacrylat, Trimethylolpropantriacrylat, ethoxyliertem Trimethylolpropantriacrylat, propoxyliertem Trimethylolpropantriacrylat, Tris-(2-hydroxyethyl)isocyanurattriacrylat und glycerylpropoxyliertem Triacrylat und Mischungen derselben.

15. Polymer nach einem der Ansprüche 10 bis 14, wobei das bzw. die tetrafunktionelle(n) Monomer(e) die allgemeine Formel (V) [CH₂=C(R¹)COOR⁷]₄C aufweist bzw. aufweisen, wobei R¹ und R⁷ die gleiche Bedeutung wie vorher aufweisen

16. Polymer nach Anspruch 15, wobei das bzw. die tetrafunktionelle(n) Monomer(e) unter:
Pentaerythrittriacrylat, alkoxyliertem Tetracrylat, Ditrimethylolpropantetracrylat und Mischungen derselben ausgewählt wird bzw. werden.

17. Polymer nach einem der Ansprüche 1 bis 16, wobei mindestens 10 % der Monomereinheiten aus nichtschwefelhaltigen Monomeren der allgemeinen Formel (VI) CH₂=C(R¹)COO(R⁸) stammen, wobei R⁸ eine aliphatische oder aromatische C1-bis C12-Gruppe ist.

18. Polymer nach Anspruch 17, wobei die nichtschwefelhaltigen Monomere ausgewählt werden unter:
Methylmethacrylat, Benzylmethacrylat, Phenylmethacrylat, Trimethytcyclohexylmethacrylat, Methacrylsäure, α- und β-Naphthylmethacrylat, Isobutylmethacrylat, Methyl-a-chloracrylat, n-Butylaerytat, 2-Ethylhexylacrylat, Isodecylacrylat, 2-Hydroxyethylacrylat, 2-Hydroxypropylacrylat, Cyclohexylacrylat; Phenoxyethylacrylat; β-Carboxyethylacrytat; Isobornylacrylat; Tetrahydrofurfurylacrylat; Propylenglykolmonoacrylat; 2-(2-Ethoxyethoxy)ethylacrylat, Cyanoethoxyethylacrylat, Cyclohexylmethacrylat, Cyclohexylacrylat, Adamantylmethacrylat und Mischungen derselben.

19. Polymer nach einem der Ansprüche 17 und 18, wobei bis zu 25 Gew.-% der gesamten Monomereinheiten, die das Polymer bilden, aus nichtschwafethaltigen Monomeren der allgemeinen Formel (VI) stammen.

20. Polymer nach Anspruch 19, wobei bis zu 95 Gew.-% der nichtschwefelhaltigen Monomere der Formel (IV) halosubstituiert sind.

21. Polymer nach Anspruch 20, wobei die halosubstituierten Monomere ausgewählt werden unter:
Chlorethylacrylat, Hexafluorbutylmethacrylat, Trichlorethylacrylat, Trichlorethylmethacrylat, Trifluorethylacrylat, Hexafluorbisphenol A-diaerylat, Tetrachlorbisphenol A-diacrylat, Pentafluorbenzylacrylat oder -methacrylat, Pentachlorphenyl(meth)acrylat, Pentafluorphenylacrylat oder - methacrylat, Perfluorcyclopropylacrylat, Perfluorcyclobutylacrylat, Perfluorcyclophenylacrylat, Perfluorcyclohexylacrylat, Perfluorcyclobutylmethacrylat, Perfluorcyclohexylmethacrylat, 1-Hydroperfluorcyclohexylacrylat, Perfluordecylacrylat, -methacrylat, Hexafluorisopropyl(meth)acrylat, Perfluornorbornylmethyl(meth)acrylat, Perfluorisobornyl(meth)acrylat, Hexafluorpentandiyl-1,5-his(meth)acrylat, Perfluorethylenglykoldi(meth)acrylat, Polyperfluorethylenglykoldi(meth)acrylat, ethoxyliertem Hexafluorbisphenol A-di(meth)acrylat, ethoxyliertem Tetrachlorbisphenol A-di(meth)acrylat, ethoxyliertem Tetrabrombisphenol A-di(meth)acrylat, Dodecafluorheptyl(meth)acrylat, Eisosafluorundeeyl(meth)acrylat, Heptadecafluordecyl(meth)acrylat, Hexadecafluornonyl(meth)acrylat, Heptadecafluordecyl(meth)acrylat, Hexadecafluornonyl(meth)acrylat, Octafluoropentyl(meth)acrylat und Perfluorbeptoxypoly(propyloxy(meth)acrylat, wobei (Meth) entweder das Acrylat oder das entsprechende Methacrylatderivat bedeutet.

22. Polymer nach einem der Ansprüche 1 bis 21, das einen Tg-Wert von mindestens 180°C aufweist.

23. Polymer nach einem der Ansprüche 1 bis 22, das eine Wärmebeständigkeit von bis zu 280 °C aufweist.

24. Photopolymerisierbare Zusammensetzung, die zur Verwendung bei der Herstellung eines optischen Polyacrylatpolymers geeignet ist, das zur Verwendung in einem planaren Lichtwellenkreis (PLC) geeignet ist, welches Polymer eine Tg (Glasübergangstemperatur) von mindestens 140 °C aufweist, wobei die Zusammensetzung Acrylatmonomer in enger Mischung mit einem Photoinitiator umfasst, wobei mindestens 20 Gew.-% des Acrylatmonomers die allgemeine Formel (II)
CH₂=C(R¹)COOR² (II)
aufweisen, wobei R¹ H oder eine aliphatische und/oder aromatische C1-bis C12-Gruppe ist und R² ein aliphatischer und/oder aromatischer Anteil ist, der mindestens ein S-Atom enthält.

25. Verfahren zur Herstellung eines Polyacrylatphotopolymers, umfassend die Schritte des:
Bereitstellens einer photopolymerisierbaren Zusammensetzung nach Anspruch 24 und Aussetzens der Zusammensetzung Licht gegenüber, um den Photoinitiator zu aktivieren.

26. Methode zur Herstellung eines planaren Lichtwellenkreises umfassend die Schritte des:
Aufbringens einer photopolymerisierbaren Zusammensetzung nach Anspruch 24 auf ein Substrat;
Projizierens eines photographischen Bilds, das die Komponenten des planaren Lichtwellenkreises definiert, auf die Zusammensetzung, um ausgewählte Teile der Zusammensetzung zu photopolymerisieren, um ein Polymer nach Anspruch 1 herzustellen; und
Entfernens von unreagierter Zusammensetzung von dem Substrat.

27. Methode nach Anspruch 26, wobei eine zweite Beseltichtungsschicht, die einen Brechungsindex aufweist, der geringer ist als derjenige des Photopolymers, über das Substrat aufgebracht wird, wobei sich die abgesetzten Photopolymerstrukturen darauf befinden; und dann ausgehärtet wird.

28. Optisches Polyacrylatpolymer, das zur Verwendung in einem planaren Lichtwellenkreis (PLC) geeignet ist, welches Polymer durch Polymerisation von Acrylatpolymer erhältlich ist, wobei mindestens 20 Gew.-% des Acrylatmonomers die allgemeine Formel (II)
CH₂=C(R¹)COOR² (II)
aufweist bzw, aufweisen, wobei R¹ und R² die gleiche Bedeutung wie vorher aufweisen
und wobei das Polymer eine Tg (Glasübergangstemperatur) von mindestens 140 °C aufweist.

29. Planarer Lichtwellenkreis, wobei die Kreisanordnung in Form eines Polymers nach einem der Ansprüche 1 bis 23 gebildet ist.

## Revendications

1. Polymère de polyacrylate optique approprié à l'utilisation dans un circuit optique planaire (PLC), dans lequel au moins 20 % en poids du total des motifs de répétition monomères est de formule générale (I)
-(-CH₂C(R¹)(COOR²)-)- (I)
dans laquelle R¹ est H ou un groupe aliphatique et/ou aromatique en C₁ à C₁₂, et R² est une fraction aliphatique et/ou aromatique contenant au moins un atome S, et dans lequel ledit polymère a une Tg (température de transition vitreuse) d'au moins 140°C.

2. Polymère selon la revendication 1, dans lequel R¹ est H ou un groupe aliphatique et/ou aromatique en C₁ à C₆.

3. Polymère selon la revendication 2. dans lequel R¹ est H ou CH₃.

4. Polymère tel que revendiqué dans l'une quelconque des revendications 1 à 3, dans lequel R² est de la formule générale -R³SR⁴ dans laquelle R⁴ est choisi parmi un groupe aliphatique CₙH_{2n+1-y}Z_{y} dans lequel n est un nombre entier prenant une valeur allant de 1 à 12, dans lequel chaque Z peut être F, Cl, Br, I ou un groupe méthacrylate, et y prend la valeur de 0 à 2n+1, et un groupe aromatique C₆H₅₋ₓAₓ, dans lequel chaque A peut être F, Cl, Br, I ou un groupe méthacrylate, et x est un entier naturel prenant une valeur allant de 0 à 5, et R³ est choisi parmi un groupe aliphatique CₙH_{2n-y}Z_{y} et un groupe aromatique C₆H₄₋ₓAₓ, dans lequel n, Z et A ont la même signification, et y prend la valeur allant de 0 à 2n, et x est un entier naturel prenant une valeur allant de 0 à 4.

5. Polymère tel que revendiqué dans la revendication 4, dans lequel n prend la valeur de 1 à 6.

6. Polymère tel que revendiqué dans l'une ou l'autre des revendications 4 et 5, dans lequel x prend la valeur de zéro.

7. Polymère tel que revendiqué dans l'une quelconque des revendications 4 à 6, dans lequel R² est choisi parmi des fractions contenant du soufre incluant: (C₆H₅)S(CH₂), (C₆H₅)S(C₂H₄), (C₆H₅)S(C₆H₄), (CH₃)S(CH₂), (CH₃)S(C₂H₄), (CH₃)S(C₆H₄), (C₂H₅)S(CH₂), (C₂H₅)S(C₂H₄) et (C₂H₅)S(C₆H₄).

8. Polymère tel que revendiqué dans l'une quelconque des revendications 4 à 6, dans lequel R² est choisi parmi le groupe comprenant: (CH₂)S(CH₂-OOC-C(R¹)=CH₂, (C₂H₄)S(C₂H₄-OOC-C(R¹)=CH₂ et (C₃H₆-S-C₃H₆-OOC-C(R¹)=CH₂, et R¹ est H ou un groupe méthyle.

9. Polymère tel que revendiqué dans l'une quelconque des revendications 1 à 8, dans lequel au moins 20 % en poids du total des motifs de répétition monomères provient d'un monomère monofonctionnel de la formule générale (II): CH₂=C(R¹)COOR² (II) dans laquelle R¹ et R² ont la même signification que précédemment.

10. Polymère tel que revendiqué dans l'une quelconque des revendications 1 à 9, dans lequel au moins 10 % en poids du total desdits motifs monomères est de un ou plusieurs monomère(s) polyfonetionnel(s) dans lequel lesdits monomères polyfonctionnels sont choisis parmi les monomères di-, tri et tétrafonctionnels.

11. Polymère tel que revendiqué dans la revendication 10, dans lequel ledit(lesdits) monomère(s) difonctionnel(s) a(ont) la formule générale (III) CH₂=C(R⁵)COOR⁶-R^{6'}OOC(R^{5'})C=H₂; dans lequel R⁵ et R⁵ sont H ou CH₃ et pourraient être identiques ou différents et R⁶ et R^{6'} sont des groupes organiques aliphatiques ou aromatiques en C₁ à C₁₂ et peuvent également être identiques ou différents.

12. Polymère tel que revendiqué dans la revendication 11, dans lequel ledit(lesdits) monomère(s) difonctionnel(s) est(sont) choisi(s) parmi: le diacrylate de 1,4-butanediol, le diacrylate d'éthylène, le diacrylate de bisphénol A éthoxylé, le diacrylate ou diméthacrylate de bisphénol A, le diacrylate de néopentylglycol, le diacrylate de diéthyléne glycol, le diméthacrylate de diéthylène glycol, le diacrylate de 1,6-hexane-diol, le diacrylate ou diméthacrylate de triéthyléne glycol; le diacrylate ou diméthacrylate de tétraéthylène glycol; le diacrylate ou diméthylacrylate de polyéthylène glycol; le diacrylate de dipropylène glycol; le diacrylate de tripropylène glycol; le diacrylate de néopentyl glycol éthoxylé; le diacrylate de néopentyl glycol propoxylé, le perfluorocyclohexyl-1,4-di(méihacrylate de méthyle), le diacrylate de perfluoroéthylèneglycol, le diacrylate d'hexafluoro-bisphénol A, le diacrylate de tétrafluorobutanediol, l'actafluorohexanediol-1,6-diaerylate et les mélanges de ceux-ci.

13. Polymère tel que revendiqué dans l'une quelconque des revendications 10 à 12, dans lequel ledit(lesdits) monomère(s) trifonctionnet(s) a(ont) la formule générale (IV), [CH₂=C(R¹)COOR⁷]₃CH; dans laquelle R¹ a même signification que précédemment et R⁷ est un groupe aliphatique ou aromatique en C₁ à C₁₂.

14. Polymère tel que revendiqué dans la revendication 13, dans lequel ledit monomère trifonctionnel est choisi parmi: le triacrylate de pentaérythritol, le triméthacrylate de triméthylolpropane, le triacrylate de triméthylol propane, le triacrylate de triméthylolpropane éthoxylé, le triacrylate de triméthylolpropane propoxylé, le triacrylate *tris*(2-hydroxyéthyl)isocyanurate, et le triacrylate de glycéryle propoxylé et les mélanges de ceux-ci.

15. Polymère tel que revendiqué dans l'une quelconque des revendications 10 à 14, dans lequel ledit(lesdits) monomère(s) tétrafonctionnel(s) a(ont) la formule générale (V) [CH₂=C(R¹)COOR⁷]₄C, dans laquelle R¹ et R⁷ ont la même signification que précédemment,

16. Polymère tel que revendiqué dans la revendication 15, dans lequel ledit(lesdits) monomère(s) tétrafonctionnel(s) est(sont) choisi(s) parmi: le tétracrylate de pentaérythritol, le tétracrylate alcoxylé, le tétracrylate de ditriméthylolpropane et les mélanges de ceux-ci.

17. Polymère tel que revendiqué dans l'une quelconque des revendications 1 à 16, dans lequel au moins 10 % des motifs de monomères sont des monomères ne contenant pas de soufre de la formule générale (VI) CH₂=C(R¹)COO(R⁸), dans laquelle R⁸ est un groupe aliphatique ou aromatique en C₁ à C₁₂.

18. Polymère tel que revendiqué dans la revendication 17, dans lequel lesdits monomères ne contenant pas de soufre sont choisis parmi: le méthacrylate de méthyle, le méthacrylate de benzyle, le méthacrylate de phényle, le méthacrylate de triméthylcyclohexyle, l'acide méthacrylique, le méthacrylate α-et β-naphtyle, le méthacrylate d'isobutyle, le α-chloroacrylate de méthyle, l'acrylate de *n*-butyte, l'acrylate de 2-éthylhexyle, l'acrylate d'isodécyle, l'acrylate de 2-hydroxyéthyle, l'acrylate de 2-hydroxypropyle, l'acrylate de cyclohexyle; l'acrylate de phénoxyéthyle; l'acrylate de β-carboxyléthyle; l'acrylate d'isobornyle; l'acrylate de tétrahydrofurfuryle; le monoacrylate de propylène glycol; l'acrylate de 2-(2-éthoxyéthoxy)éthyle, l'acrylate de cyanoéthoxyéthyle, le cyclohexyméthacrylate, le cyclohexylacrylate, le méthacrylate d'adamantyle et les mélanges de ceux-ci.

19. Polymère tel que revendiqué dans l'une quelconque des revendications 17 et 18, dans lequel jusqu'à 25 % en poids du total des motifs monomères formant le polymère provient de monomères ne contenant pas de soufre de ladite formule générale (VI).

20. Polymère tel que revendiqué dams la revendication 19, dans lequel jusqu'à 95 % en poids des monomère ne contenant pas de soufre de la formule (VI) sont substitués par un groupe halogéno.

21. Polymère tel que revendiqué dans la revendication 20, dans lequel lesdits monomères substitués par un groupe halogéno sont choisis parmi l'acrylate de chloroéthyle, le méthacrylate d'hexafluorobutyle, l'acrylate de trichloroéthyle, le méthacrylate de trichloroéthyle, l'acrylate de trifluoroéthyle, le diacrylate d'hexafluoro bisphénal A, le diacrylate de tétrachloro bisphénol A, l'acrylate ou le méthacrylate de pentafluorobenzyle, le (*méth*)acrylate de pentachlorophényle, l'acrylate ou le méthacrylate de pentafluorophényle, l'acrylate de perfluorocyclopropyle, l'acrylate de perfluorocyclobutyle, l'acrylate de perfluorocyclophényle, l'acrylate de perfluorocyclohexyle, le méthacrylate de perfluorocyclobutyle, le méthacrylate de perfluorocyclohexyle, l'acrylate de 1-hydroperfluorocyclohexyle, l'acrylate de perfluorodécyle, le méthacrylate, le (*méth*)acrylate d'hexafluoro isopropyle, le (*méth*)acrylate de perfluoronorbornylméthyle, le (*méth*)acrylate de perfluoroisobornyle, le (*méth*)acrylate d'hexafluoropentandiyl-1,5-*bis*, le di(*méth*)acrylate de perfluoroéthylèneglycol, le di(*méth*)acrylate de polyperfluoroéthylèneglycol, le di(*méth*)acrylate d'hexafluoro bisphénol A éthyloxylé, le di(*méth*)acrylate de tétrachloro bisphénol A éthyloxylé, le di(*méth*)acrylate de tétrabromo bisphénol A éthyloxylé, le (*méth*)acrylate de dodécafluoroheptyle, le (*méth*)acrylate d'éicosafluoroundécyle, le (*méth*)acrylate d'heptadécafluorodécyle, le (*méth*)acrylate d'hexadécafluorononyle, le (*méth*)acrylate d'heptadécafluorodécyle, le (*méth*)aerylate d'hexadécafluorononyle, le (*méth*)acrytate d'octafluoropentyle et le (*méth*)acrylate de perfluoroheptoxy poly(propyloxy) dans lequel (*méth*) indique soit l'acrylate soit le dérivé méthacrylate correspondant.

22. Polymère tel que revendiqué dans l'une quelconque des revendications 1 à 21, ayant une valeur de Tg d'au moins 180°C.

23. Polymère tel que revendiqué dans l'une quelconque des revendications 1 à 22, ayant une stabilité thermique allant jusqu'à au moins 280°C.

24. Composition photopolymérisable appropriée à l'utilisation dans la préparation d'un polymère polycerylate optique approprié pour l'utilisation dans un circuit optique planaire (PLC), lequel polymère a une Tg (température de transition vitreuse) d'au moins 140°C, ladite composition comprenant un monomère d'acrylate en admixtion intime avec un photoinitiateur, dans laquelle au moins 20 % en poids du monomère d'acrylate est de la formule générale (II)
CH₂=C(R¹)COOR² (II)
dans laquelle R¹ est H ou un groupe aliphatique et/ou aromatique en C₁ à C₁₂, et R² est une fraction aliphatique et/ou aromatique contenant au moins un atome S.

25. Procédé de production d'un photopolymère de polyacrylate comprenant les étapes de:
fourniture d'une composition photopolymérisable selon la revendication 24, et l'exposition de ladite composition à la lumière afin d'activer le photoinitiateur.

26. Procédé de production d'un circuit optique planaire comprenant les étapes de:
application d'une composition photopolymérisable selon la revendication 24 à un substrat
la projection de composant définissant une image photographique dudit circuit optique planaire sur ladite composition afin de photopolymériser les portions choisies de ladite composition pour produire un polymère selon la revendication 1; et
l'élimination de la composition n'ayant pas réagi dudit substrat.

27. Procédé tel que revendiqué dans la revendication 26, dans lequel une seconde couche de revêtement ayant un indice de réfraction inférieur à celui du photopolymère est appliquée sur le dessus du substrat avec les structures de photopolymère déposées par-dessus; et ensuite durcie.

28. Polymère de polyacrylate optique approprié à l'utilisation dans un circuit optique planaire (PLC), lequel polymère peut être obtenu par polymérisation de monomère d'acrylate dans lequel au moins 20 % en poids du monomère d'acrylate est de la formule générale (II)
CR₂=(R¹)COOR² (II)
dans lequel R¹ et R² ont la même signification que précédemment, et dans lequel ledit polymère a une Tg (température de transition vitreuse) d'au moins 140°C.

29. Circuit optique planaire dans lequel le montage de circuits est formé d'un polymère selon l'une quelconque des revendications 1 à 23.
